Europäisches Patentamt

European Patent Office

Office européen des brevets

(11) Veröffentlichungsnummer: **0 309 951 B1**

# EUROPÄISCHE PATENTSCHRIFT

(45) Veröffentlichungstag der Patentschrift: **18.12.91**

(51) Int. Cl.⁵: **B23B 3/30**

(21) Anmeldenummer: **88115773.9**

(22) Anmeldetag: **24.09.88**

(54) Werkzeugmaschine mit zwei Werkstückspindeln.

(30) Priorität: **01.10.87 DE 8713204 U**

(43) Veröffentlichungstag der Anmeldung:
**05.04.89 Patentblatt 89/14**

(45) Bekanntmachung des Hinweises auf die
Patenterteilung:
**18.12.91 Patentblatt 91/51**

(84) Benannte Vertragsstaaten:
**AT CH DE ES FR GB IT LI SE**

(56) Entgegenhaltungen:
**DE-A- 2 951 565
DE-A- 3 035 451
DE-A- 3 420 719
DE-A- 3 514 069
GB-A- 2 178 991**

(73) Patentinhaber: **Gildemeister AG
Morsestrasse 1
W-4800 Bielefeld 11(DE)**

(72) Erfinder: **Rehage, Gerhard
Bonifatiusstrasse 34
W-4830 Gütersloh 1(DE)**
Erfinder: **Staege, Manfred
Sonnenweg 5
W-4520 Melle 1,(DE)**
Erfinder: **Grünkemeier, Hans Wilhelm
Wilhelmstrasse 11
W-4806 Werther(DE)**

## Beschreibung

Die Erfindung betrifft eine Werkzeugmaschine mit zwei sich axial gegenüberliegenden Werkstückspindeln, von denen mindestens eine zur Übergabe eines Werkstücks von der Einspannvorrichtung der einen Spindel an die der anderen Spindel in axialer Richtung beweglich ist und mindestens zwei Werkzeugschlitten, die unabhängig voneinander auf parallel zur Spindelachse verlaufenden, eigenen, vorderen und hinteren Führungen und auf senkrecht zur Spindelachse verlaufenden eigenen Führungen verschieblich sind, und mit jeweils einem Werkzeugrevolver auf jedem der zwei Werkzeugschlitten, der Werkzeugaufnahmen an seinem Außenumfang aufweist, wobei die Schaltachse des einen Werkzeugrevolvers senkrecht zur Spindelachse und die Schaltachse des anderen Werkzeugrevolvers parallel zur Spindelachse angeordnet ist, wobei die Werkzeuge beider Werkzeugrevolver im wesentlichen radial zu den Schaltachsen an den Werkzeugaufnahmen angeordnet sind und wobei die bewegliche Spindel auf einer diser Führungen verschieblich ist.

Eine derartige Werkzeugmaschine mit zwei Werkstückspindeln, bei der die eine Werkstückspindel um eine horizontal Achse geschwenkt werden kann, ist aus DE-A 34 20 719 bekannt. Dadurch ergibt sich für jeden Werkzeugträger ein separater Arbeitsraum, so daß eine gegenseitige Beinflussung nicht möglich ist. Die Schaltachse des einen Werkzeugrevolvers ist dabei senkrecht zur Spindelachse während die des zweiten Werkzeugrevolvers parallel zur Spindelachse ausgerichtet ist.

Die Werkzeugaufnahmen befinden sich auf dem Umfang. In der Anmeldung ist ein Sonderfall beschrieben, der das Verfahren der Schwenkspindel hinter den feststehenden Spindelkasten vorsieht. In diesem Fall können beide Werkzeugrevolver auf ein Werkstück in der Hauptspindel arbeiten. Die Bearbeitung eines von der Gegenspindel gehaltenen Werkstücks durch Werkzeuge des vorderen Revolvers ist nicht möglich. Die Zugänglichkeit zu den Spannfuttern und Werkzeugträgern für einen Bedienungsmann wird durch die kurzen Längsführungsbahnen vor der Spindelachse ermöglicht, die die Bearbeitung an der Gegenspindel verhindern.

Eine weiter Werkzeugmaschine mit zwei Werkstückspindeln ist aus DE-A 35 14 069 bekannt. Die Anordnung der Werkzeugrevolver und der Werkzeuge ist bei dieser Maschine so getroffen, daß jeder Revolver bevorzugt mit einer Spindel zusammenarbeitet und die Werkzeuge auf diese Spindel ausgerichtet sind. Wenn vom gleichen Werkzeugträger auch das Werkstück in der jeweils anderen Spindel bearbeitet werden soll, dann werden teuere Sonderhalter erforderlich, die trotzdem nur eine sehr eingeschränkte Bearbeitung zulassen. Der der Bedienungsseite zugewandte Werkzeugträger ist auf kurzen Längsführungsbahnen gelagert und kragt weit vor, wenn er ein Werkstück in der ihm zugewiesenen Werkstückspindel bearbeitet. Dadurch bleibt die Maschine zwar gut zugänglich, die Stabilität des Werkzeugträgers aber leidet und die Bearbeitungsmöglichkeiten werden dadurch weiter eingeschränkt.

Der Erfindung liegt die Aufgabe zugrunde, eine möglichst uneingeschränkte Bearbeitung mit weitgehend denselben Werkzeugen an beiden Spindeln zu ermöglichen, ohne die Zugänglichkeit für die Bedienung zu erschweren.

Die Aufgabe wird durch die Merkmale des Hauptanspruchs gelöst.

Die Werkzeugträger sind bei der Erfindung nicht bevorzugt einer Werkstückspindel zugeordnet, sondern einer Bearbeitungsaufgabe. Der Werkzeugrevolver mit der Schaltachse senkrecht zur Werkstückspindel trägt im wesentlichen die Innenbearbeitungswerkzeuge. Das gleiche Werkzeug, daß an der 1. Spindel zum Einsatz kommt, kann durch eine 180 Grad Schaltung des Werkzeugrevolvers der zweiten Spindel gegenübergestellt werden und hier ebenfalls ohne Einschränkung zum Einsatz kommen. Der Werkzeugrevolver mit der Schaltachse parallel zur Werkstückspindelachse trägt bevorzugt die Außenbearbeitungswerkzeuge, insbes. Werkzeuge für Querbohrungen, Einstiche, Fräsflächen etc.. Die Werkzeuge werden lediglich durch Verfahren des Längsschlittens an ihren Einsatzort von einer Werkstückspindel zur anderen gebracht.

Der Vorteil dieser Anordnung geht sogar so weit, daß Werkzeuge des 1. Revolvers unverändert auf dem 2. Revolver eingesetzt werden können, wenn z. B. eine Innenbearbeitung und eine Querbohrung mit gleichem Durchmesser erzeugt werden soll. Die Anzahl der zu bevorratenden Werkzeuge für eine Werkzeugmaschine vermindert sich dadurch erheblich. Insbesondere bei den relativ teuren angetriebenen Werkzeugen sind derartige Einsparungen von erheblicher Bedeutung für die wirtschaftliche Bearbeitung eines Werkstücks.

Durch die Länge der parallel zur Spindelachse verlaufenden Führungen für den Werkzeugträger, der vor der Werkstückspindel angeordnet ist, ergeben sich auch keine Einschränkungen in der Bearbeitung an beiden Spindeln aus Stabilitätsgründen. Die Zugänglichkeit zur Maschine wird durch die senkrechte Anordnung der Führungsbahnen gewährleistet.

Die Erfindung wird an Hand der nachfolgenden Zeichnungen näher erläutert. Es zeigen:

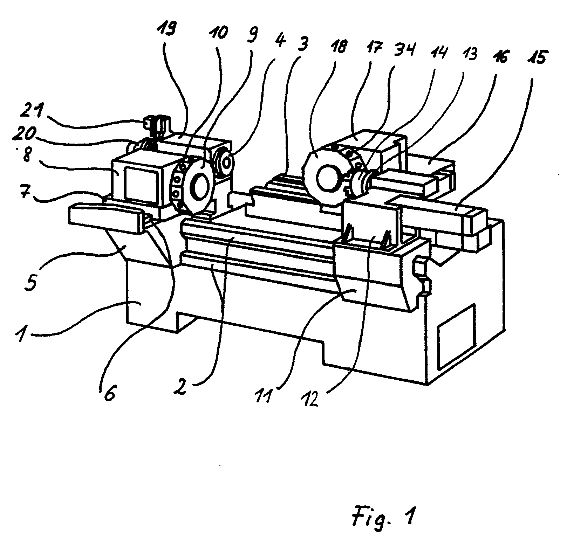

Fig. 1     eine Gesamtansicht der Maschine;
Fig. 2     eine Draufsicht auf die Maschine.

Auf einem Maschinenbett 1 sind vordere Führungsbahnen 2 und hintere Führungsbahnen 3 parallel zur Achse der Hauptspindel 4 angeordnet. Auf der vorderen Führungsbahn 2 ist ein erster Längsschlitten 5 gelagert, der senkrecht zur Hauptspindelachse verlaufende Führungen 6 für einen Werkzeugschlitten 7 trägt. Auf dem Werkzeugschlitten 7 ist ein Werkzeugrevolver 8 befestigt, dessen Schaltachse sich parallel zur Spindel 4 erstreckt. Der Werkzeugträger 9 des Werkzeugrevolvers 8 weist an seinem Umfang Werkzeugaufnahmebohrungen 10 auf.

Auf den vorderen Führungsbahnen 2 ist ein weiterer Längsschlitten 11 gelagert, der einen Spindelkasten 12 trägt. In dem Spindelkasten 12 ist eine Werkstückspindel 13 drehbar gelagert und mit einem Spannfutter 14 verbunden. Die Werkstückspindel 13 wird von einem Motor 15 angetrieben. Die Vorschubantriebe für die beiden Längsschlitten 5,11 sind nicht dargestellt.

Auf den hinteren Führungsbahnen 3 ist ein Längsschlitten gelagert, der einen quer zu den hinteren Führungsbahnen 3 verschieblichen Werkzeugschlitten 16 trägt. Auf dem Werkzeugschlitten 16 ist ein Werkzeugrevolver 17 mit einem Werkzeugträger 18 aufgebaut, dessen Schaltachse senkrecht zur Spindelachse verläuft.

Zwischen den vorderen und hinteren Führungsbahnen 2,3 ist gegenüber der längsverschieblichen Werkstückspindel 13 die Hauptspindel 4 im unverschieblichen Spindelkasten 19 gelagert. An der Rückseite der Hauptspindel 4 ist der Spindelantrieb 20 und der Drehzahlmesser 21 zu erkennen.

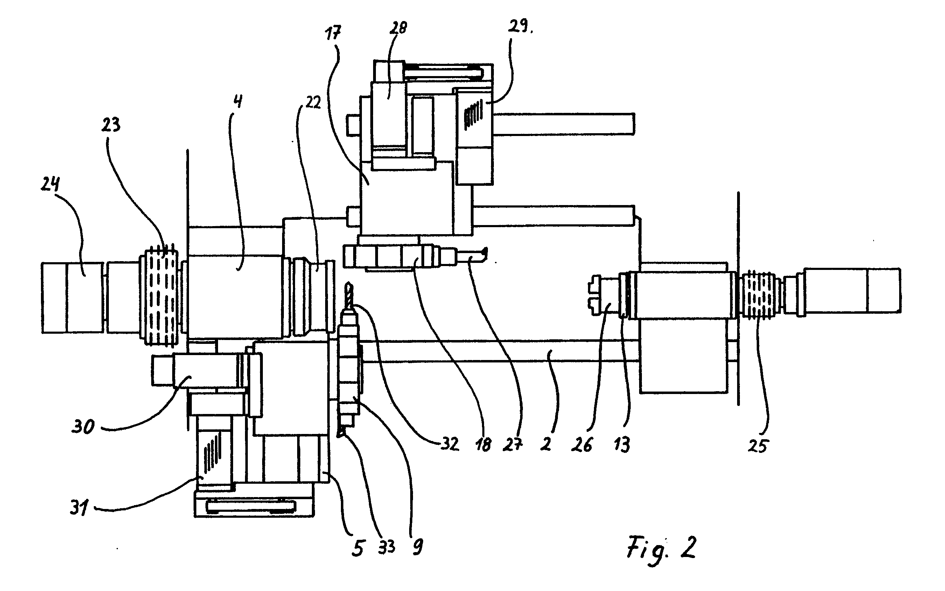

Wie aus Fig. 2 hervorgeht, ist die Hauptspindel 4 mit einem Spannzangenfutter 22 versehen und wird über eine Riemenscheibe 23 angetrieben. Das Spannzangenfutter 22 wird durch einen Spannzylinder 24 betätigt. Die der Hauptspindel 4 axial gegenüberliegende Werkstückspindel 13 wird durch einen Motor 15 über eine Riemenscheibe 25 angetrieben und trägt an der der Hauptspindel 4 zugewandten Seite ein Spannfutter 26.

In den Werkzeugträger 18 des Revolverkopfs 17 ist beispielsweise eine Bohrstange 27 eingesetzt. Der Werkzeugträger 18 wird durch den Motor 28 um vorgegebene Winkelbeträge geschwenkt. Neben dem Revolverkopf 17 ist der Vorschubantrieb 29 für die Bewegung des Werkzeugträgers 18 quer zur Spindelachse angebracht. Der zweite Werkzeugträger 9 besitzt in gleicher Weise wie der Werkzeugträger 18 einen Schwenkantrieb 30 und wird durch den Vorschubmotor 31 quer zur Spindelachse bewegt. In den Werkzeugträger 9 eingesetzt sind ein rotierend angetriebenes Bohrwerkzeug 32 und ein Drehmeißel 33.

Der Werkzeugträger 9 kann mittels des Längsschlittens 5 auf seinen Führungsbahnen 2 aus dem Arbeitsbereich der Hauptspindel 13 verschoben werden. Wie man in Fig. 2 sieht, können die unveränderten Werkzeuge 32, 33 des Werkzeugträgers 9 auf die von der Hauptspindel 4 gehaltenen Werkstücke und auf die von der Werkstückspindel 13 getragenen Werkstücke einwirken.

Das Werkzeug 27 des Werkzeugträgers 18 ist der Werkstückspindel 13 zugewandt und würde an einem von dieser gehaltenen Werkstück eine Innenbearbeitung ausführen. Um das Werkzeug 27 an der Hauptspindel 4 zum Einsatz zu bringen, muß der Werkzeugträger 18 um 180 Grad geschaltet werden. Danach steht des Werkzeug 27 für eine Innenbearbeitung an einem von der Hauptspindel 4 getragenen Werkstück bereit.

Die gleichen Werkzeuge könen jedoch nicht nur unverändert an beiden Spindeln 4, 13 arbeiten, sie können auch zwischen den beiden Werkzeugträgern 9, 18 ausgetauscht werden, wenn die Werkzeugaufnahmebohrungen 8, 34 und die Befestigungselemente identisch ausgeführt sind.

**Patentansprüche**

1. Werkzeugmaschine mit zwei sich axial gegenüberliegenden Werkstückspindeln (4,13), von denen mindestens eine zur Übertragung eines Werkstücks von der Einspannvorrichtung (22) der einen Spindel (4) an die der anderen Spindel (13) in axialer Richtung beweglich ist und mindestens zwei Werkzeugschlitten (7,16), die unabhängig voneinander auf parallel zur Spindelachse verlaufenden eigenen, vorderen (2) und hinteren (3) Führungen und auf senkrecht zur Spindelachse verlaufenden eigenen Führungen verschieblich sind, und mit jeweils einem Werkzeugrevolver (8,17) auf jedem der zwei Werkzeugschlitten (7,16), der Werkzeugaufnahmen an seinem Außenumfang aufweist, wobei die Schaltachse des einen Werkzeugrevolvers (17) senkrecht zur Spindelachse und die Schaltachse des anderen Werkzeugrevolvers (8) parallel zur Spindelachse angeordnet ist, wobei die Werkzeuge (27,32,33) beider Werkzeugrevolver (8,17) im wesentlichen radial zu den Schaltachsen an den Werkzeugaufnahmen (10) angeordnet sind und wobei die bewegliche Spindel auf einer dieser parallel zur Spindelachse verlaufenden Führungen (2,3) verschieblich ist, dadurch gekennzeichnet, daß die Führungen (2,3) auf gegenüberliegenden Seiten der Spindelachse derart angeordnet sind, daß die Werkzeuge der beiden Werkzeugschlitten (7,16) sowohl die von der einen als auch die von der anderen Werkstückspindel getragenen Werkstücke bearbeiten können und daß die parallel zur Spindelachse verlaufenden, vorderen (2) und hinteren (3) Führungen den gesamten Arbeitsbereich der Werkzeugmaschine überdecken und daß die vorderen Führungen (2) in einer senkrechten Ebene angeordnet sind.

2. Werkzeugmaschine nach Anspruch 1 dadurch gekennzeichnet, daß mehrere Werkzeuge (32) in Werkzeugaufnahmen (10) beider Revolver (8,17) rotierend antreibbar sind.

3. Werkzeugmaschine nach Anspruch 1 dadurch gekennzeichnet, daß die Werkzeugaufnahmen (10) des einen Werkzeugrevolvers (17) identisch zu den Werkzeugaufnahmen (34) des zweiten Werkzeugrevolvers (8) ausgeführt sind.

## Claims

1. A machine tool comprising two axially oppositely disposed workpiece spindles (4, 13) of which at least one is movable in the axial direction for transferring a workpiece from the clamping device (22) of the one spindle (4) to that of the other spindle (13) and at least two tool carriages (7, 16) which are displaceable independently of each other on their own front (2) and rear (3) guides which extend parallel to the spindle axis, and on their own guides which extend perpendicularly to the spindle axis, and a respective tool turret (8, 17) on each of the two tool carriages (7, 16), which has tool receiving means at its outside periphery, wherein the indexing axis of the one tool turret (17) is arranged perpendicularly to the spindle axis and the indexing axis of the other tool turret (8) is arranged parallel to the spindle axis, wherein the tools (27, 32, 33) of both tool turrets (8, 17) are arranged substantially radially relative to the indexing axes at the tool receiving bans (10) and wherein the movable spindle is displaceable on one of said guides (2, 3) which extend parallel to the spindle axis, characterised in that the guides (2, 3) are arranged on opposite sides of the spindle axis in such a way that the tools of the two tool carriages (7, 16) can operate on both the workpieces carried by the one workpiece spindle and also the workpieces carried by the other workpiece spindle, and that the front (2) and rear (3) guides which extend parallel to the spindle axis cover the entire working region of the machine tool and that the front guides (2) are arranged in a perpendicular plane.

2. A machine tool according to claim 1 characterised in that a plurality of tools (32) are rotatably drivable in tool receiving means (10) of both turrets (8, 17).

3. A machine tool according to claim 1 characterised in that the tool receiving means (10) of the one tool turret (17) are identical to the tool receiving means (34) of the second tool turret (8).

## Revendications

1. Machine-outil, avec deux broches porte-pièces (4,13) se faisant face axialement, dont au moins l'une est mobile en direction axiale, pour faire passer une pièce à usiner du dispositif de blocage (22) d'une broche (4) à celui de l'autre broche (13), et au moins deux chariots à outils (7,16), déplaçables indépendamment l'un de l'autre sur des guidages avant (2) et arrière (3) propres, parallèles à l'axe de broche, et sur des guidages propres, perpendiculaires à l'axe de broche, avec chaque fois un revolver à outils (8,17), sur celui des deux chariots à outils (7,16) qui présente des réceptacles à outils sur sa périphérie extérieure, l'axe de manoeuvre d'un revolver à outils (17) étant disposé perpendiculairement à l'axe de broche et l'axe de manoeuvre de l'autre revolver à outils (8) étant disposé parallèlement à l'axe de broche, les outils (27,32,33) des deux revolvers à outils (8,17) étant disposés sensiblement radialement par rapport aux axes de manoeuvre, sur les réceptacles à outils (10), et la broche mobile étant déplaçable sur l'un de ces guidages (2,3) parallèles à l'axe de broche, caractérisée en ce que les guidages (2,3) sont disposés sur les côtés opposés de l'axe de broche, de telle façon que les outils des deux chariots à outils (7,16) puissent effectuer un usinage, tant des pièces portées par une broche à outils que par l'autre et que les guidages avant (2) et arrière (3), qui s'étendent parallèlement à l'axe de broche, recouvrent l'ensemble de la zone de travail de la machine-outil et que les guidages avant (2) sont disposés dans un plan vertical.

2. Machine-outil selon la revendication 1, caractérisée en ce que plusieurs outils (32), situés dans des réceptacles à outils (10) des deux revolvers (8,17), sont susceptibles d'être entraînés en rotation.

3. Machine-outil selon la revendication 1, caractérisée en ce que les réceptacles à outils (10) d'un revolver à outils (17) sont identiques aux réceptacles à outils (34) de l'autre revolver à outils (8).

*Fig. 1*

Fig. 2

EP 0 309 951 B1